# EUROPEAN PATENT APPLICATION

(11) **EP 4 765 928 A1**
(43) Date of publication of application: **24.06.2026**
(21) Application number: 24876326.0
(22) Date of filing: 06.09.2024
(51) Int. Cl.: H04W 24/02

(54) **SERVICE AREA DIVISION METHOD, APPARATUS AND SYSTEM, PROCESSOR AND STORAGE MEDIUM**

(30) Priority: 12.10.2023 CN 202311322205
(71) Applicant: Datang Mobile Communications Equipment Co., Ltd., Beijing 100085 (CN)
(72) Inventor: GU, Xiaofei, Beijing 100085 (CN); QIN, Ruiyan, Beijing 100085 (CN); SONG, Yaqin, Beijing 100085 (CN)
(74) Representative: Ipsilon
(86) International application number: PCT/CN2024/117529
(87) International publication number: WO 2025/077506

(57) **Abstract**

The present disclosure relates to a service area division method, apparatus and system, a radio access network (RAN), a user equipment, a processor readable storage medium and a computer program product. The method comprises: determining an area to be processed; on the basis of a service area division policy, performing area division on the area to be processed, so as to obtain a plurality of divided service areas, wherein the service area division policy is pre-configured by a target division granularity, that matches area features of the area to be processed, in distributed nodes in a distributed network architecture, the RAN, the user equipment, or an activity range of the user equipment; and constructing a service area list on the basis of area information of the plurality of service areas, wherein the service area list is used for being sent to the user equipment to pre-configure service areas for the user equipment.

## Description

The present application claims priority to Chinese Patent Application No. 2023113222057, entitled "SERVICE AREA DIVISION METHOD, APPARATUS AND SYSTEM, PROCESSOR AND STORAGE MEDIUM", filed on October 12, 2023, which is incorporated herein by reference in its entirety.

### TECHNICAL FIELD

The present disclosure relates to the field of mobile communications technologies, and in particular, to a service area division method, a service area division apparatus and a service area division system, a processor and a storage medium.

### BACKGROUND

Traditional mobile communication network technologies such as a 5th generation mobile communication technology, 5G, adopt a centralized control manner for network management and control, so as to provide network services such as communication for user equipments, UEs.

In the current network management and control process, in order to provide better network services for users, tracking area, TA, division is performed on the basis of a service range of a base station, and then, multiple TAs are grouped into a same TA list, TAL, and allocated to one UE, so that when the UE moves in an area corresponding to the TAL, the UE does not need to perform frequent mobility registrations, thereby reducing frequent interactions with the network.

However, with gradual development of the current mobile communication technology, the mobile communication network system gradually evolves from centralized control to distributed control. With this evolvement, if the service area division is still performed according to the division granularity of the TAs in the centralized network architecture, the area division granularity shall be improper, the UE is prone to frequently perform mobility registration updates during its movement or a paging range of the UE may become excessively large, where both cases lead the UE to large overheads and heavy signaling interactions.

### SUMMARY

In view of the above, there are provided a service area division method, a service area division apparatus and a service area division system, a processor and a storage medium.

In a first aspect, the present disclosure provides a service area division method. The method is applied to a radio access network, RAN, and includes:
determining an area to be processed;
performing area division on the area to be processed according to a service area division policy, to obtain multiple service areas after division, where the service area division policy is pre-configured by a target division granularity, and the target division granularity matches with area features of the area to be processed and is selected from a group consisting of division granularities of a distributed node in a distributed network architecture, the RAN, a user equipment, and an activity range of the user equipment; and
constructing a service area list based on area information of the multiple service areas, where the service area list is sent to the user equipment, and is is configured to indicate that no mobility registration updates nor handovers occur when the user equipment moves in multiple service areas in the service area list.

In an embodiment, the service area division policy is pre-configured with a single RAN as the target division granularity, and performing the area division on the area to be processed according to the service area division policy, to obtain the multiple service areas after division includes:
in a case where a deployment of base stations in the area to be processed meets a first base station distribution condition, dividing the area to be processed into the plurality of service areas by taking the single RAN in the area to be processed as the division granularity, each RAN connecting to multiple distributed nodes.

In an embodiment, the service area division policy is pre-configured with multiple RANs as the target division granularity, and performing the area division on the area to be processed according to the service area division policy, to obtain the multiple service areas after division includes:
in a case where a deployment of base stations in the area to be processed meets a second base station distribution condition, aggregating the plurality of multiple RANs meeting a preset physical distance condition into one division granularity; and
dividing the area to be processed into the multiple service areas based on the division granularity after aggregation.

In an embodiment, the service area division policy is pre-configured with the user equipment as the target division granularity, and performing the area division on the area to be processed according to the service area division policy, to obtain the multiple service areas after division includes:
acquiring network slice information carried by the user equipment in an initial registration, the network slice information including network slice types supported by the user equipment; and
grouping, based on the network slice information, distributed nodes in the area to be processed which support an identical network slice type into one service area, to obtain the multiple service areas after division.

In an embodiment, the service area division policy is pre-configured with the activity range of the user equipment as the target division granularity, and performing the area division on the area to be processed according to the service area division policy, to obtain the multiple service areas after division includes:
based on the activity range of the user equipment, classifying a distributed node within the activity range of the user equipment in the area to be processed as one type of service area, and classifying a distributed node outside the activity range of the user equipment as other service area, to obtain the multiple service areas after division.

In an embodiment, after constructing the service area list based on the area information of the multiple service areas, the method further includes:
in response to a mobility registration update request of the user equipment, acquiring a service area list corresponding to an area where the user equipment is located, and sending the acquired service area list to the user equipment.

In an embodiment, in response to the mobility registration update request of the user equipment, acquiring the service area list corresponding to the area where the user equipment is located includes:
in a case where the area where the user equipment is located takes each distributed node in the distributed network architecture as the division granularity or takes the activity range of the user equipment as the division granularity, in response to the mobility registration update request of the user equipment, receiving area information of multiple service areas fed back by respective distributed nodes in the area where the user equipment is located, and constructing the service area list corresponding to the area where the user equipment is located based on the area information of the multiple service areas; and
in a case where the area where the user equipment is located takes a single RAN as the division granularity or aggregates multiple RANs as the division granularity, in response to the mobility registration update request of the user equipment, receiving area information of multiple service areas fed back by respective RANs in the area where the user equipment is located, the area information of the multiple service areas being fed back by the respective RANs, and constructing the service area list corresponding to the area where the user equipment is located based on the area information of the multiple service areas.

In a second aspect, the present disclosure provides a service area division method. The method is applied to a user equipment, and includes:
sending a mobility registration update request to a radio access network, RAN, and receiving a service area list sent by the RAN, where the service area list includes area information of multiple service areas, the multiple service areas are obtained by performing area division on an area to be processed where the user equipment is located according to a service area division policy, the service area division policy is pre-configured by a target division granularity, and the target division granularity matches with area features of the area to be processed and is selected from a group consisting of division granularities of a distributed node in a distributed network architecture, the RAN, the user equipment, and an activity range of the user equipment; and
when the user equipment moves among the multiple service areas, sending a configuration instruction to distributed nodes in the multiple service areas based on the area information of the multiple service areas, to complete mobile processing of the user equipment among the multiple service areas.

In an embodiment, when the user equipment moves among the multiple service areas, sending the configuration instruction to the distributed nodes in the multiple service areas based on the area information of the multiple service areas includes:
when the user equipment moves from a first service area to a second service area in the multiple service areas, sending a deactivation instruction to a distributed node in the first service area, and sending an activation instruction to a distributed node in the second service area; and
transferring a service of the user equipment from the distributed node in the first service area to the distributed node in the second service area.

In a third aspect, the present disclosure further provides a service area division apparatus. The apparatus includes:
a determining module, which is configured to determine an area to be processed;
a dividing module, which is configured to perform area division on the area to be processed according to a service area division policy, to obtain multiple service areas after division, where the service area division policy is pre-configured by a target division granularity, and the target division granularity matches with area features of the area to be processed and is selected from a group consisting of division granularities of a distributed node in a distributed network architecture, a radio access network, RAN, a user equipment, and an activity range of the user equipment; and
a constructing module, which is configured to construct a service area list based on area information of the multiple service areas, where the service area list is sent to the user equipment, and is configured to indicate that no mobility registration updates nor handovers occur when the user equipment moves in the multiple service areas.

In an embodiment, the service area division policy is pre-configured with a single RAN as the target division granularity, and the dividing module is configured to, in a case where a deployment of base stations in the area to be processed meets a first base station distribution condition, divide the area to be processed into the multiple service areas by taking the single RAN in the area to be processed as the division granularity, each RAN connecting to multiple distributed nodes.

In an embodiment, the service area division policy is pre-configured with multiple RANs as the target division granularity, and the dividing module is configured to: in a case where a deployment of base stations in the area to be processed meets a second base station distribution condition, aggregate the multiple RANs meeting a preset physical distance condition into one division granularity; and
divide the area to be processed into the multiple service areas based on the division granularity after aggregation.

In an embodiment, the service area division policy is pre-configured with the user equipment as the target division granularity, and the dividing module is configured to: acquire network slice information carried by the user equipment in an initial registration, the network slice information including network slice types supported by the user equipment; and
group, based on the network slice information, distributed nodes in the area to be processed which support an identical network slice type into one service area, to obtain the multiple service areas after division.

In an embodiment, the service area division policy is pre-configured with the activity range of the user equipment as the target division granularity, and the dividing module is configured to, based on the activity range of the user equipment, classify a distributed node within the activity range of the user equipment in the area to be processed as one type of service area, and classify a distributed node outside the activity range of the user equipment as other service area, to obtain the multiple service areas after division.

In an embodiment, the apparatus further includes:
a transceiving module, which is configured to: in response to a mobility registration update request of the user equipment, acquire a service area list corresponding to an area where the user equipment is located, and send the acquired service area list to the user equipment.

In an embodiment, the transceiving module is configured to: in a case where the area where the user equipment is located takes each distributed node in the distributed network architecture as the division granularity or takes the activity range of the user equipment as the division granularity, in response to the mobility registration update request of the user equipment, receive area information of multiple service areas fed back by respective distributed nodes in the area where the user equipment is located, and construct the service area list corresponding to the area where the user equipment is located based on the area information of the multiple service areas; and
in a case where the area where the user equipment is located takes a single RAN as the division granularity or aggregates multiple RANs as the division granularity, in response to the mobility registration update request of the user equipment, receive area information of multiple service areas in the area where the user equipment is located, the area information of the multiple service areas being fed back by respective RANs, and construct the service area list corresponding to the area where the user equipment is located based on the area information of the multiple service areas.

In a fourth aspect, the present disclosure further provides a service area division apparatus, the apparatus being applied to a user equipment and including:
a receiving module, which is configured to send a mobility registration update request to a radio access network, RAN,) and receive a service area list sent by the RAN, where the service area list includes area information of multiple service areas, the multiple service areas are obtained by performing area division on an area to be processed where the user equipment is located according to a service area division policy, the service area division policy is pre-configured by a target division granularity, and the target division granularity matches with area features of the area to be processed and is selected from a group consisting of division granularities of a distributed node in a distributed network architecture, the RAN, the user equipment, and an activity range of the user equipment; and
a sending module, which is configured to send a configuration instruction to distributed nodes in the multiple service areas based on the area information of the multiple service areas when the user equipment moves among the multiple service areas, to complete mobile processing of the user equipment among the multiple service areas.

In an embodiment, the sending module is configured to: when the user equipment moves from a first service area to a second service area in the multiple service areas, send a deactivation instruction to a distributed node in the first service area, and send an activation instruction to a distributed node in the second service area; and
transfer a service of the user equipment from the distributed node in the first service area to the distributed node in the second service area.

In an embodiment, when the user equipment moves among the multiple service areas, the sending module is configured to: when the user equipment moves from a first service area to a second service area in the multiple service areas, send a deactivation instruction to a distributed node in the first service area, and sending an activation instruction to a distributed node in the second service area; and
transfer a service of the user equipment from the distributed node in the first service area to the distributed node in the second service area.

In a fifth aspect, the present disclosure further provides a radio access network, RAN, including a memory, a transceiver and a processor;
the memory is configured to store a computer program; the transceiver is configured to transceive data under control of the processor; and the processor is configured to read the computer program in the memory and perform:
determining an area to be processed;
performing area division on the area to be processed according to a service area division policy, to obtain multiple service areas after division, and constructing a service area list based on area information of the multiple service areas, where the service area division policy is pre-configured by a target division granularity, and the target division granularity matches with area features of the area to be processed and is selected from a group consisting of division granularities of a distributed node in a distributed network architecture, the RAN, a user equipment, and an activity range of the user equipment; and
constructing a service area list based on area information of the multiple service areas, where the service area list is sent to the user equipment, and is configured to indicate that no mobility registration updates nor handovers occur when the user equipment moves in multiple service areas in the service area list.

In an embodiment, the service area division policy is pre-configured with a single RAN as the target division granularity, and performing the area division on the area to be processed according to the service area division policy, to obtain the multiple service areas after division includes:
in a case where a deployment of base stations in the area to be processed meets a first base station distribution condition, dividing the area to be processed into the multiple service areas by taking the single RAN in the area to be processed as the division granularity, each RAN connecting to multiple distributed nodes.

In an embodiment, the service area division policy is pre-configured with multiple RANs as the target division granularity, and performing the area division on the area to be processed according to the service area division policy, to obtain the multiple service areas after division includes:
in a case where a deployment of base stations in the area to be processed meets a second base station distribution condition, aggregating the multiple RANs meeting a preset physical distance condition into one division granularity; and
dividing the area to be processed into the multiple service areas based on the division granularity after aggregation.

In an embodiment, the service area division policy is pre-configured with the user equipment as the target division granularity, and performing the area division on the area to be processed according to the service area division policy, to obtain the multiple service areas after division includes:
acquiring network slice information carried by the user equipment in an initial registration, the network slice information including network slice types supported by the user equipment; and
grouping, based on the network slice information, distributed nodes in the area to be processed which support an identical network slice type into one service area, to obtain the multiple service areas after division.

In an embodiment, the service area division policy is pre-configured with the activity range of the user equipment as the target division granularity, and performing the area division on the area to be processed according to the service area division policy, to obtain the multiple service areas after division includes:
based on the activity range of the user equipment, classifying a distributed node within the activity range of the user equipment in the area to be processed as one type of service area, and classifying a distributed node outside the activity range of the user equipment as other service area, to obtain the multiple service areas after division.

In an embodiment, the processor is further configured to read the computer program in the memory and perform:
in response to a mobility registration update request of the user equipment, acquiring a service area list corresponding to an area where the user equipment is located, and sending the acquired service area list to the user equipment.

In an embodiment, in response to the mobility registration update request of the user equipment, acquiring the service area list corresponding to the area where the user equipment is located includes:
in a case where the area where the user equipment is located takes each distributed node in the distributed network architecture as the division granularity or takes the activity range of the user equipment as the division granularity, in response to the mobility registration update request of the user equipment, receiving area information of multiple service areas fed back by respective distributed nodes in the area where the user equipment is located, and constructing the service area list corresponding to the area where the user equipment is located based on the area information of the multiple service areas; and
in a case where the area where the user equipment is located takes a single RAN as the division granularity or aggregates multiple RANs as the division granularity, in response to the mobility registration update request of the user equipment, receiving area information of multiple service areas in the area where the user equipment is located, the area information of the multiple service areas being fed back by respective RANs, and constructing the service area list corresponding to the area where the user equipment is located based on the area information of the multiple service areas.

In a sixth aspect, the present disclosure further provides a user equipment, including a memory, a transceiver and a processor;
the memory is configured to store a computer program; the transceiver is configured to transceive data under control of the processor; and the processor is configured to read the computer program stored in the memory and perform:
sending a mobility registration update request to a radio access network, RAN, and receiving a service area list sent by the RAN, where the service area list includes area information of multiple service areas, the multiple service areas are obtained by performing area division on an area to be processed where the user equipment is located according to a service area division policy, the service area division policy is pre-configured by a target division granularity, and the target division granularity matches with area features of the area to be processed and is selected from a group consisting of division granularities of a distributed node in a distributed network architecture, the RAN, the user equipment, and an activity range of the user equipment; and
when the user equipment moves among the multiple service areas, sending a configuration instruction to distributed nodes in the multiple service areas based on the area information of the multiple service areas, to complete mobile processing of the user equipment among the multiple service areas.

In an embodiment, when the user equipment moves among the multiple service areas, sending the configuration instruction to the distributed nodes in the multiple service areas based on the area information of the multiple service areas includes:
when the user equipment moves from a first service area to a second service area in the multiple service areas, sending a deactivation instruction to a distributed node in the first service area, and sending an activation instruction to a distributed node in the second service area; and
transferring a service of the user equipment from the distributed node in the first service area to the distributed node in the second service area.

In a seventh aspect, the present disclosure further provides a service area division system, including:
a radio access network, RAN, which is configured to: determine an area to be processed, perform area division on the area to be processed according to a service area division policy, to obtain multiple service areas after division, and construct a service area list based on area information of the multiple service areas; where the service area division policy is pre-configured by a target division granularity, and the target division granularity matches with area features of the area to be processed and is selected from a group consisting of division granularities of a distributed node in a distributed network architecture, the RAN, a user equipment, and an activity range of the user equipment; and
the user equipment, which is configured to send a mobility registration update request to the RAN and receive the service area list sent by the RAN.

In an embodiment, the system further includes the distributed node;
in a case where the service area division policy takes the distributed node in the distributed network architecture as the target division granularity, the distributed node is configured to: allocate service areas to the user equipment if the user equipment moves among multiple service areas; and
send area information of the allocated service areas to the RAN, to enable the RAN to issue a service area list including the area information of the allocated service areas to the user equipment.

In an eighth aspect, the present disclosure further provides a processor readable storage medium. The computer readable storage medium has a computer program stored thereon, and the computer program, when executed by a processor, implements the following steps:
determining an area to be processed;
performing area division on the area to be processed according to a service area division policy, to obtain multiple service areas after division, where the service area division policy is pre-configured by a target division granularity, and the target division granularity matches with area features of the area to be processed and is selected from a group consisting of division granularities of a distributed node in a distributed network architecture, a radio access network, RAN, a user equipment, and an activity range of the user equipment; and
constructing a service area list based on area information of the multiple service areas, where the service area list is sent to the user equipment, and is configured to indicate that no mobility registration updates nor handovers occur when the user equipment moves in multiple service areas in the service area list.

In the above-described service area division method and apparatus, the processor, the storage medium and the computer program product, in response to a paging request sent by a user equipment, a target area where the user equipment is located is determined; area division is performed on the target area according to a service area division policy to obtain multiple service areas after division; the service area division policy is pre-configured by a target division granularity, that matches area features of the target area, in a distributed node in a distributed network architecture, an RAN, the user equipment or an activity range of the user equipment; and the service area list is constructed based on area information of the multiple service areas, and the service area list is sent to the user equipment and is configued to indicate that no mobility registration updates nor handovers occur when the user equipment moves in the multiple service areas.

Details of one or more embodiments of the present disclosure are set forth in the accompanying drawings and the description below. Other features, objects, and advantages of the present disclosure will be apparent from the description, the accompanying drawings, and the claims.

### BRIEF DESCRIPTION OF THE DRAWINGS

To better describe and illustrate the embodiments and/or examples of the invention disclosed here, reference may be made to one or more drawings. The additional details or examples used to describe the drawings should not be considered as limiting the scope of any of the disclosed application, the presently described embodiments and/or examples, and the best modes of the presently understood invention.
FIG. 1 is a schematic diagram of a distributed network architecture according to an embodiment;
FIG. 2 is a view of an application environment of a service area division method according to an embodiment;
FIG. 3 is a schematic flowchart of a service area division method according to an embodiment;
FIG. 4 is a schematic structural diagram of a service area division result determined by taking a distributed node as a target division granularity in an embodiment;
FIG. 5 is a schematic structural diagram of a service area division result determined by taking an RAN as a target division granularity in an embodiment;
FIG. 6 is an exemplary schematic flowchart of a service area division method with multiple RANs as a target division granularity according to an embodiment;
FIG. 7 is a schematic structural diagram of a service area division result determined by taking multiple RANs as a target division granularity in an embodiment;
FIG. 8 is an exemplary schematic flowchart of a service area division method with a user equipment as a target division granularity according to an embodiment;
FIG. 9 is a schematic structural diagram of a service area division result determined by taking a user equipment as a target division granularity in an embodiment;
FIG. 10 is a schematic structural diagram of a service area division result determined by taking an activity range of a user equipment as a target division granularity in an embodiment;
FIG. 11 is an exemplary schematic flowchart of a service area division method according to an embodiment;
FIG. 12 is a schematic flowchart of a service area division method applied to a user equipment according to an embodiment;
FIG. 13 is a schematic flowchart of a step of alternating a service between service areas in an embodiment;
FIG. 14 is a structural block diagram of a service area division apparatus according to an embodiment; and
FIG. 15 is another structural block diagram of a service area division apparatus according to an embodiment.

### DETAILED DESCRIPTION

Detailed description of the present disclosure is further given as follows according to embodiments in conjunction with the accompanying drawings, to make the objects, technical solutions, and advantages of the present disclosure more explicit. It should be understood that the embodiments described herein are only for explaining the present disclosure, rather than limiting the present disclosure.

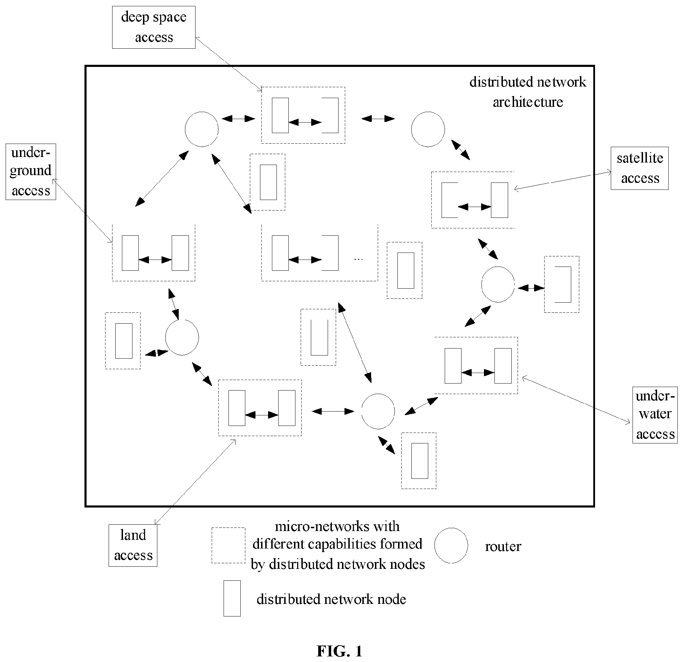

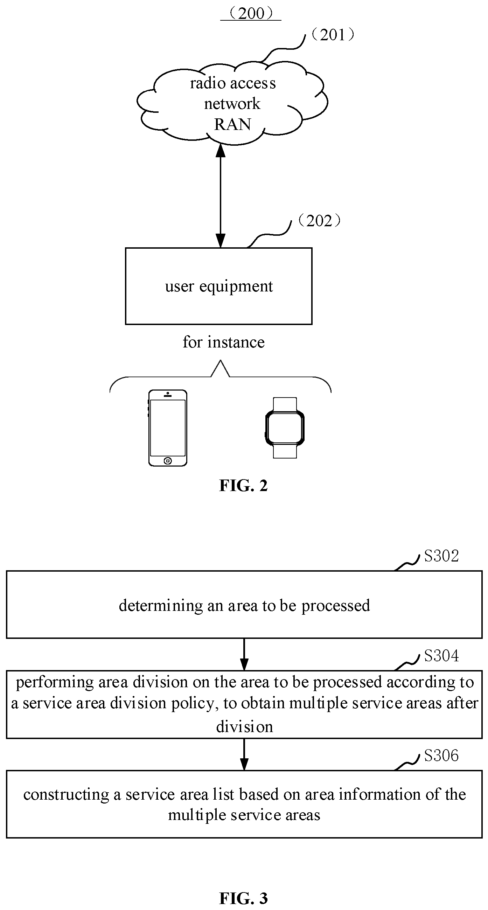

In an embodiment, with the gradual development of mobile communication technologies, network architectures of 6th generation mobile networks (6G networks) and following gradually-iterated mobile communication networks tend to be centralized-and-distributed combined. A distributed network architecture, as shown in FIG. 1, includes a large number of distributed nodes. The distributed network architecture needs to be considered in the design of the 6G network, and accordingly, based on an example of the 6G network, a service area division method is provided according to an embodiment of the present disclosure. Implementations for other iterated networks are similar to those for the 6G network. The service area division method may be applied to an application environment shown in FIG. 2. A service area division system (200) is deployed in the application environment, and the service area division system (200) includes a radio access network, RAN, (201) and a user equipment (202). The RAN (201) is a radio accesee network, and is configured to connect the user equipment (such as a mobile phone and a computer) to a core network. The user equipment (202) can communicate with the network through the RAN. The RAN (201) is configured to determine an area to be processed, and perform area division on the area to be processed according to a service area division policy, to obtain multiple service areas after division. Then, a service area list is constructed based on area information of the multiple service areas. The service area division policy is pre-configured by a target division granularity, that matches area features of the area to be processed, in a distributed node in the distributed network architecture, the RAN, the user equipment, or an activity range of the user equipment. The user equipment (202) is configured to send a mobility registration update request to the RAN and receive the service area list sent by the RAN; and accordingly, based on the received service area list, no mobility registration updates nor handovers occur as the user equipment moves among the multiple service areas in the service area list.

Optionally, the user equipment (202) related in the embodiments of the present disclosure may refer to a device providing voice and/or data connectivity for a user, a handheld device having a wireless connection function, any other processing device connected to a wireless modem, or the like. The user equipment is not limited in the embodiments of the present disclosure.

In an embodiment, the service area division system further includes a distributed node (also referred to as a network node or a distributed network node). In a case where the service area division policy takes the distributed node in the distributed network architecture as the target division granularity, the distributed node is configured to: if the user equipment moves among multiple service areas, allocate service areas to the user equipment; and send area information of the allocated service areas to the RAN, to enable the RAN to issue a service area list including the area information of the allocated service areas to the user equipment (202), thereby achieving a configuration for the user equipment (202).

In an embodiment, a service area division method is provided. Description is given with an example that the method is applied to a radio access network (which is abbreviated as RAN in embodiments hereinafter) in FIG. 2. As shown in FIG. 3, the service area division method includes following steps 302 to 306.

Step 302 includes: determining an area to be processed.

In implementation, distributed network nodes with different functions are constructed in the 6G network. Furthermore, when a user performs communication based on the 6G network, in order to ensure that a user equipment does not need to perform mobility registration frequently during movement, a coverage range of the 6G network needs to be divided into service areas, so as to enable the movement of the user equipment in each service area not to cause mobility registration or handover. Therefore, the RAN in a mobile communication system acquires area information and determines the area to be processed, i.e., an area to be divided into service areas.

Step 304 includes: performing area division on the area to be processed according to a service area division policy, to obtain multiple service areas after division.

The service area division policy is pre-configured by a target division granularity, that matches area features of the area to be processed, in a distributed node in a distributed network architecture, the RAN, the user equipment, or an activity range of the user equipment.

In implementation, in order to prevent the service areas divided from the area to be processed from being excessively small which still causes frequent mobility registration updates due to the movement of the user equipment, and prevent the service areas from being excessively large which may result in long paging delay and decreased paging success rate of the user equipment, when performing service area division on the area to be processed, the RAN may determine a service area division policy matching the area to be processed based on the area features of the area to be processed. Different service area division policies have different division granularities for the service areas. The division granularity for the service areas includes, but is not limited to, the distributed node in the distributed network architecture, the RAN, the user equipment, or the activity range of the user equipment. Selection of the matching service area division policy by the RAN is substantially selection of a service area division policy corresponding to a matching target division granularity. Then, based on the target division granularity in the service area division policy, the RAN performs area division on the area to be processed, to obtain the multiple service areas after division.

Step 306 includes: constructing a service area list based on area information of the multiple service areas.

The service area list is sent to the user equipment, and is configured to implement a service area pre-configuration for the user equipment, and to indicate that no mobility registration updates nor handovers occur when the user equipment moves among multiple service areas in the service area list.

In implementation, the RAN constructs the service area list based on the area information of the multiple service areas. In the service area division, with regard to different division granularities in the service area division policies, network devices corresponding to the different division granularities may participate in division and allocation of the service areas. Then, the RAN currently connected to the user equipment can receive the area information of the service areas fed back by each other network device in the area to be processed, and then constructs the service area list based on the area information of the multiple service areas, so that when the user equipment moves in the service areas corresponding to the service area list, no mobility registration updates occur.

In the above-described service area division method, the service area division policy containing the target division granularity is matched to the area to be processed based on the area features of the area to be processed, area division is performed on the area to be processed according to the service area division policy, and the area to be processed can be divided into multiple service areas with proper sizes. In this way, it is ensured that when the user equipment moves among multiple service areas of the area to be processed, no mobility registration updates nor handovers occur, and large overheads and heavy signaling interactions due to an overlarge paging range can be avoided.

In the following embodiments of the present disclosure, the service area division process for the area to be processed is described by taking each of multiple different division granularities of the service area division policies as the target division granularity, and details are as follows.

In an embodiment, in the area to be processed, there are a large number of distributed nodes of the 6G distributed network, and one RAN can serve multiple distributed nodes at the same time, that is, the RAN can connect to multiple distributed nodes. Therefore, based on the area features of the area to be processed, with one RAN as a reference, each distributed node to which the RAN can connect is taken as the division granularity and division of the service areas (denoted by FAs) is performed accordingly. That is, in a case where the service area division policy matching the area to be processed takes the distributed node as the target division granularity, the procedure of step 304 in which area division is performed on the area to be processed according to the service area division policy to obtain the multiple service areas after division is explained as follows.

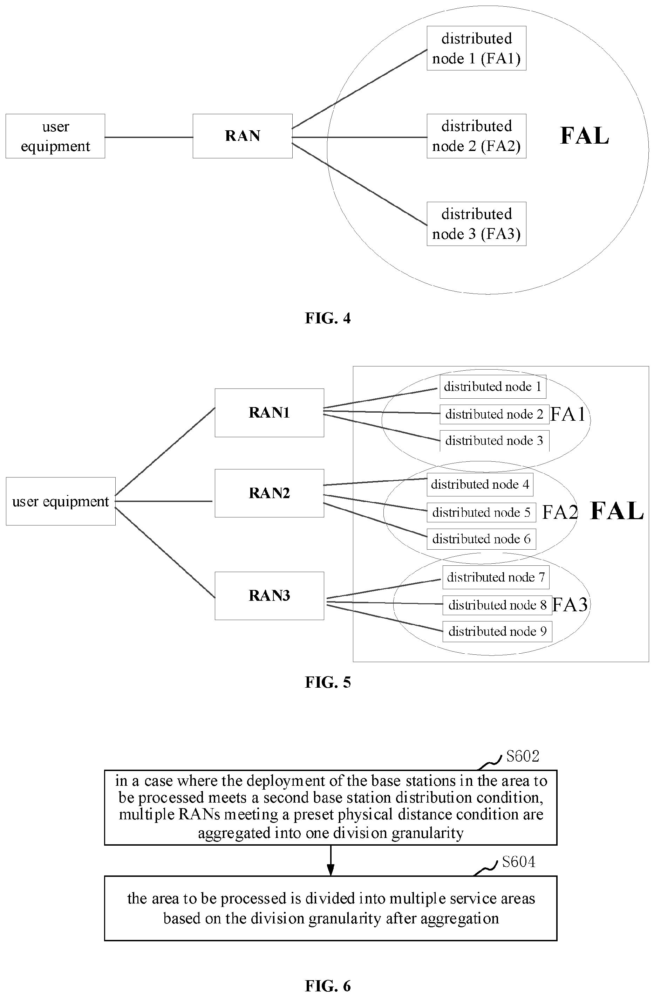

Reference can be made to FIG. 4, which schematically illustrates a service area division result determined by performing service area division on the area to be processed according to the service area division policy with the distributed node as the target division granularity. If the RAN can serve distributed node 1, distributed node 2, distributed node 3, and the like, with the distributed node as the target division granularity, the area to be processed is divided into FA1 for distributed node 1, FA2 for distributed node 2, and FA3 for distributed node 3. The service area division process is as follows: when the area division of the area to be processed is performed with the distributed node as the target division granularity, the user equipment accesses the mobile communication network through the RAN, the RAN selects one distributed node (for example, distributed node 1) from multiple distributed nodes (distributed node 1, distributed node 2 and distributed node 3) for the user equipment to access, and meanwhile the RAN informs the rest distributed nodes (i.e., distributed node 2 and distributed node 3) that service areas are to be allocated, and then, the RAN constructs the service area list (denoted by FAL) including the area information of FA1, FA2 and FA3 based on the area information of the service areas divided and allocated by the respective distributed nodes. Therefore, when the user equipment moves in the areas corresponding to the service area list, no mobility registration updates occur.

Optionally, in the embodiment, a grouping principle for the service area list is as follows: in a case where the current user equipment frequently moves in a distributed node area of a certain base station, for example, the user equipment frequently moves in an area under coverage of distributed node 1, distributed node 2 and distributed node 3 served by the RAN, distributed node 1, distributed node 2 and distributed node 3 are grouped into one service area list.

In the embodiment, the area to be processed is divided into multiple service areas according to the respective distributed nodes with the distributed node as the target division granularity, and the sizes of the service areas match with the area features of the area to be processed, thereby avoiding large overheads and heavy signaling interactions when the user equipment moves in the multiple service areas corresponding to the area to be processed.

In an embodiment, in the area to be processed, there are a large number of distributed nodes of the 6G distributed network, and one RAN can serve multiple distributed nodes at the same time. Then, based on the area features of the area to be processed, with the RAN as the target division granularity, all distributed nodes to those one RAN can connect are grouped into one service area (FA) to perform the service area division of the area to be processed. That is, in a case where the service area division policy matching the area to be processed is pre-configured with a single RAN as the target division granularity, the procedure of step 304 in which area division is performed on the area to be processed according to the service area division policy to obtain the multiple service areas after division may include:
step 304a: in a case where a deployment of base stations in the area to be processed meets a first base station distribution condition, dividing the area to be processed into multiple service areas by taking the single RAN in the area to be processed as the division granularity.

Each RAN connects to multiple distributed nodes.

In implementation, the first base station distribution condition specifies that distances between the base stations in the area to be processed are within a preset distance interval, or deployment positions of the base stations meet a preset position distribution condition. Then, in the case where the deployment of the base stations in the area to be processed meets the first base station distribution condition, the area to be processed is divided into the multiple service areas by taking the single RAN in the area to be processed as the division granularity. As shown in FIG. 5, RAN1 serves distributed node 1, distributed node 2, distributed node 3, and the like, and the service area division with the single RAN as the target division granularity means that all the distributed nodes corresponding to RAN1 are grouped into one service area (FA). Then, as in the example shown in FIG. 5, respective RANs in the area to be processed implement the division and allocation of the service areas. That is, RAN1 groups distributed node 1, distributed node 2 and distributed node 3 into one FA1; if RAN2 can serve distributed node 4, distributed node 5 and distributed node 6, RAN2 groups distributed node 4, distributed node 5 and distributed node 6 into one FA2; and, if RAN3 can serve distributed node 7, distributed node 8, distributed node 9, and the like, RAN3 groups distributed node 7, distributed node 8 and distributed node 9 into one FA3. Thus, the area to be processed is divided into multiple service areas. Further, one service area list (FAL) can be formed based on FA1, FA2 and FA3 obtained after division, and consequently, when the user equipment moves in the areas corresponding to the service area list, no mobility registration updates occur.

In the embodiment, the area to be processed is divided into multiple service areas according to the respective distributed nodes with the single RAN as the target division granularity, and the sizes of the service areas match with the area features of the area to be processed, thereby avoiding large overheads and heavy signaling interactions when the user equipment moves in the multiple service areas corresponding to the area to be processed.

In an embodiment, in a case where there are a large number of base stations deployed in the 6G distributed network in the area to be processed, e.g., the number of the base stations exceeds a preset number threshold, based on the area features of the area to be processed, with multiple RANs as the target division granularity, distributed nodes served by the multiple RANs are grouped into one service area. That is, the service area division policy is pre-configured by taking the multiple RANs as the division granularity. Then, as shown in FIG. 6, the procedure of step 304 in which area division is performed on the area to be processed based on the service area division policy to obtain the multiple service areas after division may include steps 602 to 604.

In step 602, in a case where the deployment of the base stations in the area to be processed meets a second base station distribution condition, multiple RANs meeting a preset physical distance condition are aggregated into one division granularity.

In implementation, the second base station distribution condition specifies that distances between the base stations in the area to be processed are smaller than a first preset distance threshold (that is, the base stations are deployed relatively densely). The physical distance condition specifies that physical distances between the RANs are smaller than a second preset distance threshold. Then, in the case where the deployment of the base stations in the area to be processed meets the second base station distribution condition, the RAN aggregates the multiple RANs meeting the preset physical condition into one division granularity. That is, the multiple RANs meeting the physical distance condition in the area to be processed serve as the division granularity for one service area.

In step 604, the area to be processed is divided into multiple service areas based on the division granularity after aggregation.

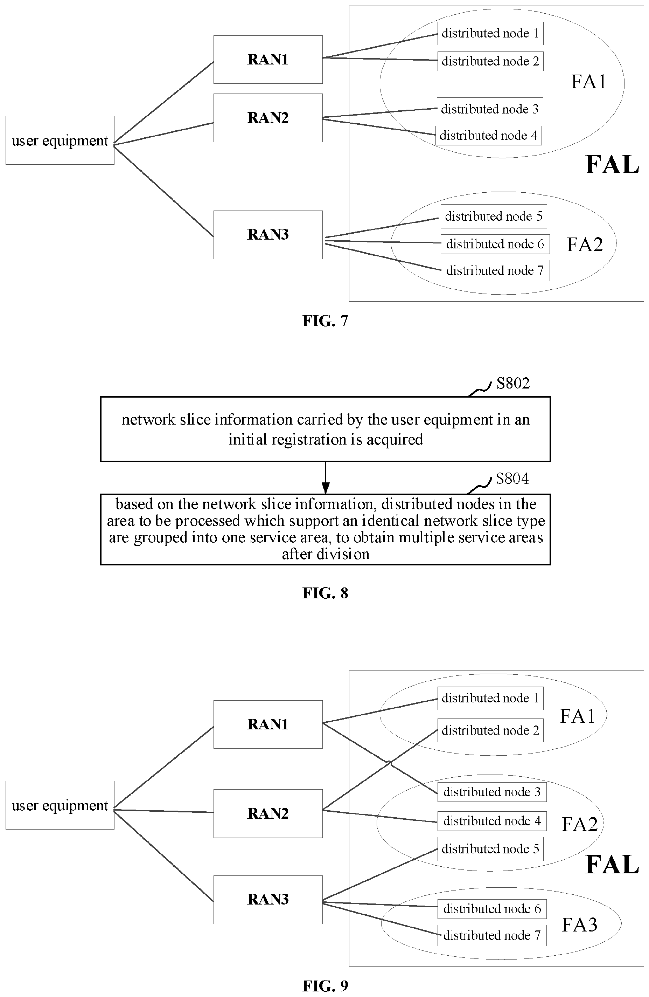

In implementation, the RAN divides the area to be processed into the multiple service areas based on the division granularity after aggregation. For example, RAN1 serves distributed node 1 and distributed node 2, RAN2 serves distributed node 3 and distributed node 4, and RAN1 and RAN2 are close to each other physically, that is, meet the preset physical distance condition; thus, as shown in FIG. 7, all the distributed nodes served by RAN1 and RAN2 can be grouped into one service area FA1. RAN3 is far away from each of RAN1 and RAN2 (that is, the preset physical distance condition is not satisfied), and then, distributed node 5, distributed node 6, and distributed node 7 served by RAN3 can be grouped into one independent service area FA2. In this way, RAN1, RAN2, and RAN3 divide the area to be processed into the multiple service areas. Further, for the multiple service areas divided from the area to be processed, the RAN (RAN currently connected to the user equipment) can construct the service area list based on the area information of the multiple service areas after division, so that no mobility registration updates occur when the user equipment moves in the areas corresponding to the service area list.

Optionally, in the embodiment, a grouping principle for the service area list is as follows: if the area to be processed includes a city center with a relatively high population density (with more deployed base stations) and a suburb with a relatively low population density (with fewer deployed base stations), and the base stations in the city center and those in the suburb are far from each other, distributed nodes covered by the base stations deployed in the city center with the relatively high population density are grouped into one FA1, and distributed nodes covered by the base stations deployed in the suburb with the relatively low population density are grouped into one FA2.

In the embodiment, the area to be processed is divided into multiple service areas according to the respective distributed nodes with the multiple RANs as the target division granularity, and the sizes of the service areas match with the area features of the area to be processed, thereby avoiding large overheads and heavy signaling interactions when the user equipment moves in the multiple service areas corresponding to the area to be processed.

In an embodiment, the service area division is not limited to the distributed nodes served by the RAN or the single distributed node, whereas the mobile communication system may alternatively perform the service area division based on a network slice type carried in an initial registration of the user equipment. That is, in a case where the service area division policy matching the area to be processed is pre-configured with the user equipment as the target division granularity, as shown in FIG. 8, the step 304 in which area division is performed on the area to be processed according to the service area division policy to obtain the multiple service areas after division may include steps 802 to 804.

In step 802, network slice information carried by the user equipment in an initial registration is acquired.

The network slice information includes network slice types supported by the user equipment.

In implementation, the RAN acquires the network slice types carried by the user equipment in the initial registration, for example, the RAN requests for network slice selection assistance information, NSSAI.

In step 804, based on the network slice information, distributed nodes in the area to be processed which support an identical network slice type are grouped into one service area, to obtain multiple service areas after division.

In implementation, based on the network slice information, the RAN groups the distributed nodes in the area to be processed that support the identical network slice type into one service area, so as to obtain the multiple service areas after division, and accordingly, mobility registrations or handovers can be reduced during the movement of the user equipment. As shown in FIG. 9, RAN1 serves distributed node 1 and distributed node 3, RAN2 serves distributed node 2 and distributed node 4, and RAN3 serves distributed node 5, distributed node 6, and distributed node 7. Since distributed node 1 and distributed node 2 support the same NSSAI, distributed node 1 and distributed node 2 are grouped into FA1. Similarly, distributed node 3, distributed node 4, and distributed node 5 support the same NSSAI, and therefore are grouped into FA2; and distributed node 6 and distributed node 7 support the same NSSAI and therefore are grouped into FA3, resulting in the multiple service areas FA1, FA2, and FA3 after division. Furthermore, the multiple service areas FA1, FA2, and FA3 constitute one service area list FAL, i.e., an FA list.

In the embodiment, the area to be processed is divided into multiple service areas according to the network slice types of the user equipment with the user equipment as the target division granularity, and the sizes of the service areas match with the area features of the area to be processed, thereby avoiding large overheads and heavy signaling interactions when the user equipment moves in the multiple service areas corresponding to the area to be processed.

In an embodiment, a range in the area to be processed within which the user equipment frequently moves is determinable, and consequently, based on area features of the area to be processed, service area division is performed on the area to be processed by taking a movement range of the user equipment as the target division granularity. That is, the service area division policy is pre-configured by taking the activity range of the user equipment as the division granularity, and the procedure of step 304 in which area division is performed on the area to be processed according to the service area division policy to obtain the multiple service areas after division may include:
step 304d: based on the activity range of the user equipment, a distributed node within the activity range of the user equipment in the area to be processed is classified as one type of service area, and a distributed node outside the activity range of the user equipment is classified as other service area, so as to obtain multiple service areas after division.

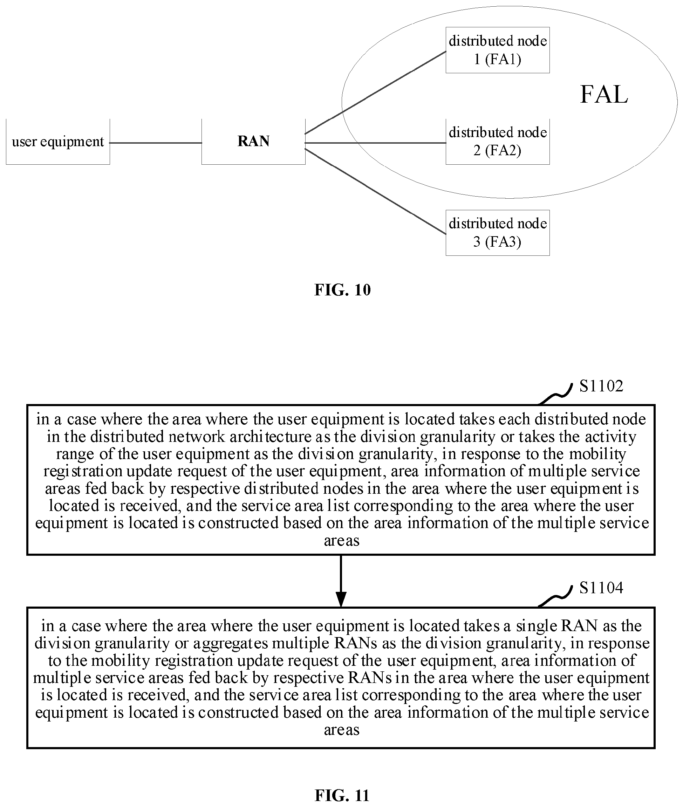

In implementation, based on the activity range of the user equipment, the RAN classifies distributed node(s) within the activity range of the user equipment in the area to be processed as one type of service area, and classifies distributed node(s) outside the activity range of the user equipment as other service area(s), so as to obtain the multiple service areas after division. As shown in FIG. 10, RAN1 can serve distributed node 1, distributed node 2, distributed node 3, and the like, and the user equipment frequently moves within coverage of distributed node 1 and distributed node 2. Distributed node 1 corresponds to FA1, distributed node 2 corresponds to FA2, and in order to avoid frequent mobility registration updates during the movement of the user, FA 1 and FA2 may form one FAL, i.e., one FA list. FA3 can be classified into another FAL, that is, belongs to another FA list. In this way, the area to be processed is divided into multiple service areas.

In the embodiment, the area to be processed is divided into multiple service areas with the activity range of the user equipment as the target division granularity, and the sizes of the service areas match with the area features of the area to be processed, thereby avoiding large overheads and heavy signaling interactions when the user equipment moves in the multiple service areas corresponding to the area to be processed.

In an embodiment, after the service area division is performed on each area to be processed in advance, when the user equipment performs a service such as communication in a certain area, after step 306, the method further includes:
step 307: in response to a mobility registration update request of the user equipment, acquiring a service area list corresponding to an area where the user equipment is located, and sending the acquired service area list to the user equipment.

In implementation, in response to the mobility registration update request from the user equipment, the RAN establishes a communication connection with the user equipment, acquires the service area list (FAL) corresponding to the area where the user equipment is located, and sends the acquired service area list to the user equipment. As a result, the user equipment can perform mobile communication according to a configuration of each service area in the service area list upon reception of the service area list.

In the embodiment, when the user equipment performs the communication service in the mobile communication system including a distributed network structure, on the basis of the service area list issued by the RAN, the user equipment may not need to perform mobility registration updates when moving in respective service areas included in the service area list, thereby reducing resource overheads and signaling interactions of the user equipment.

In an embodiment, for different service area division policies (i.e., different service area division granularities), the allocation of the service areas is performed by different network nodes. For example, under the service area division policy with the RAN as the service area division granularity, the RAN currently connected to the user equipment may receive the area information of the service areas divided by other RANs in the area to be processed. Under the service area division policy with the distributed node as the service area division granularity, the RAN connected to the user equipment may receive the area information of the service areas divided by other distributed nodes in the area to be processed. Then, the process of forming the service area list may also differ due to different service area division policies. As shown in FIG. 11, the procedure of step 307 includes steps 1102 to 1104.

In step 1102, in a case where the area where the user equipment is located takes each distributed node in the distributed network architecture as the division granularity or takes the activity range of the user equipment as the division granularity, in response to the mobility registration update request of the user equipment, area information of multiple service areas fed back by respective distributed nodes in the area where the user equipment is located is received, and the service area list corresponding to the area where the user equipment is located is constructed based on the area information of the multiple service areas.

In implementation, in the case where the area where the user equipment is located takes each distributed node in the distributed network architecture as the division granularity or takes the activity range of the user equipment as the division granularity, the respective distributed nodes in the area where the user equipment is located allocate the service areas. The RAN currently connected to the user equipment receives, in response to the mobility registration update request of the user equipment, the area information of multiple service areas after division fed back by the respective distributed nodes in the area where the user equipment is located, and constructs the service area list for the area where the user equipment is located based on the area information of the multiple service areas.

In step 1104, in a case where the area where the user equipment is located takes a single RAN as the division granularity or aggregates multiple RANs as the division granularity, in response to the mobility registration update request of the user equipment, area information of multiple service areas fed back by respective RANs in the area where the user equipment is located is received, and the service area list corresponding to the area where the user equipment is located is constructed based on the area information of the multiple service areas.

In implementation, in the case where the area where the user equipment is located takes the single RAN as the division granularity or aggregates multiple RANs as the division granularity, respective RANs in the area where the user equipment is located allocate the service areas. The RAN currently connected to the user equipment receives, in response to the mobility registration update request of the user equipment, the area information of multiple service areas fed back by other RANs in the area where the user equipment is located, and then constructs the service area list for the area where the user equipment is located based on the area information of the multiple service areas.

In the embodiment, different network nodes accomplish the service area division under different service area division policies. Accordingly, the user equipment does not need to perform frequent mobility registration updates when moving in respective service areas contained in the service area list, which reduces resource overheads and signaling interactions of the user equipment.

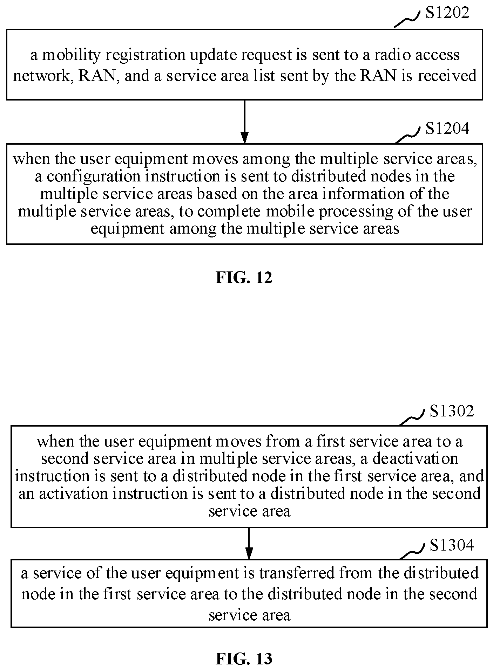

In another embodiment, there is provided a service area division method, the method is applied to a user equipment. As shown in FIG. 12, the method includes steps 1202 to 1204.

In step 1202, a mobility registration update request is sent to a radio access network, RAN, and a service area list sent by the RAN is received.

The service area list includes area information of multiple service areas. The multiple service areas are obtained by performing area division on an area to be processed where the user equipment is located according to a service area division policy. The service area division policy is pre-configured by a target division granularity, that matches area features of the area to be processed, in a distributed node in a distributed network architecture, the RAN, the user equipment, or an activity range of the user equipment.

In implementation, in the process of implementing a communication service, the user equipment sends the mobility registration update request to a certain RAN meeting an access condition in an area where the user equipment is located, and the RAN issues the service area list in response to the mobility registration update request, so that the user equipment may receive the service area list and performs mobile communication accordingly. The process of constructing the service area list is already described in the above embodiments, and is not repeated herein.

In step 1204, when the user equipment moves among the multiple service areas, a configuration instruction is sent to distributed nodes in the multiple service areas based on the area information of the multiple service areas, to complete mobile processing of the user equipment among the multiple service areas.

In implementation, when the user equipment moves among the multiple service areas, the user equipment sends the configuration instruction to the distributed nodes in the area where the user equipment is located based on the area information of the multiple service areas provided by the service area list, and the mobile communication of the user equipment in the area where the user equipment is located is realized with alternate services of the distributed nodes.

In the embodiment, since the division granularity of the service area list matches with area features of the area where the user equipment is located, the mobile service can be provided for the user equipment based on respective service areas after division in the service area list. Thus, fewer mobility registration updates are required during mobile communication of the user equipment, thereby reducing resource overheads and signaling interactions of the user equipment.

In an embodiment, in order to further save the resource overheads of the user equipment, when the user equipment moves among the respective service areas, the RAN may perform pre-configuration for the user equipment based on the service area list, to implement the alternate services of the respective service areas, thereby reducing related handover signaling interactions between the user equipment and network elements in the service areas. As shown in FIG. 13, the procedure of step 1202 includes steps 1302 to 1304.

In step 1302, when the user equipment moves from a first service area to a second service area in multiple service areas, a deactivation instruction is sent to a distributed node in the first service area, and an activation instruction is sent to a distributed node in the second service area.

In implementation, after receiving the pre-configuration by the RAN for the area where the user equipment is located, the user equipment may directly activate a distributed node in a configured service area to change the service area without performing any related handover signaling interactions with the network elements in the service areas, and thus, service continuity can be ensured without performing a traditional selection and access process through complex signaling interactions. For instance, the user equipment moves from the first service area to the second service area in the multiple service areas, when entering the second service area, the user equipment sends the activation instruction to the distributed node in the second service area to ensure that the distributed node in the second service area can successfully take over the distributed node in the first service area to continue the communication service, and the user equipment sends the deactivation instruction to the distributed node in the first service area to adjust the distributed node in the first service area into an inactive state, so as to save the resource overheads.

In step 1304, a service of the user equipment is transferred from the distributed node in the first service area to the distributed node in the second service area.

In implementation, the user equipment transfers the service from the distributed node in the first service area to the distributed node in the second service area, thereby realizing the transfer of the communication service during the movement.

In the embodiment, pre-configuration for the user equipment is performed based on the area information of the multiple service areas provided in the service area list, and then, in execution of the service, the distributed node in the configured service area can be directly activated or deactivated, instead of the traditional selection and access process through the complex signaling interactions. Hence, the service continuity interruption is reduced, and the service continuity is well ensured.

Optionally, during execution of the service by the user equipment, in case of update or abnormality of the service area list, the user equipment may send a reconfiguration instruction to each distributed node in the service area to reallocate the distributed nodes in respective service areas, rather than leading the user equipment to perform a reconfiguration operation through complex signaling interactions.

It should be understood that, although the steps in the schematic flowcharts involved in the above embodiments are shown in sequence as indicated by arrows therein, the steps are not necessarily performed in sequence as indicated by the arrows. Unless explicitly stated herein, the steps are not limited to being performed in any exact order and may be performed in other orders. At least a part of the steps in the schematic flowcharts involved in the above embodiments may include multiple sub-steps or multiple stages, which are not necessarily performed simultaneously, but may be performed at different moments, and the sub-steps or the stages are not necessarily performed in sequence, but may be performed in turn or alternately with at least a part of other steps or with at least part of the sub-steps or the stages in other steps.

Based on the same inventive concept, a service area division apparatus is further provided according to an embodiment of the present disclosure, for implementing the above service area division method. The implementation solution for solving problems provided by the apparatus is similar to the implementation solution described in the above method, and therefore, for the definitions in one or more embodiments directed to the service area division apparatus provided below, reference can be made to the definitions of the service area division method in the above description, and these definitions are not repeated herein.

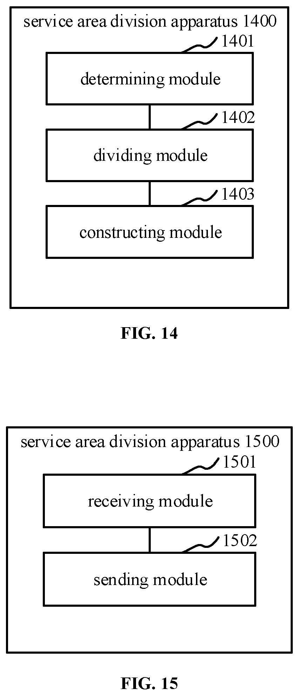

In an embodiment, as shown in FIG. 14, there is provided a service area division apparatus 1400, including a determining module 1401, a dividing module 1402 and a constructing module 1403.

The determining module 1401 is configured to determine an area to be processed.

The dividing module 1402 is configured to perform area division on the area to be processed according to a service area division policy, to obtain multiple service areas after division. The service area division policy is pre-configured by a target division granularity, that matches with area features of the area to be processed, in a distributed node in a distributed network architecture, a radio access network, RAN, a user equipment, or an activity range of the user equipment.

The constructing module 1403 is configured to construct a service area list based on area information of the multiple service areas. The service area list is sent to the user equipment, and is configured to perform a service area pre-configuration for the user equipment, and to indicate that no mobility registration updates nor handovers occur when the user equipment moves in the multiple service areas.

In an embodiment, the service area division policy is pre-configured with a single RAN as the target division granularity, and the dividing module 1402 is configured to, in a case where a deployment of base stations in the area to be processed meets a first base station distribution condition, divide the area to be processed into the plurality of service areas by taking the single RAN in the area to be processed as the division granularity, each RAN connecting to multiple distributed nodes.

In an embodiment, the service area division policy is pre-configured with multiple RANs as the target division granularity, and the dividing module 1402 is configured to: in a case where a deployment of base stations in the area to be processed meets a second base station distribution condition, aggregate the multiple RANs meeting a preset physical distance condition into one division granularity; and
divide the area to be processed into the multiple service areas based on the division granularity after aggregation.

In an embodiment, the service area division policy is pre-configured with the user equipment as the target division granularity, and the dividing module 1402 is configured to: acquire network slice information carried by the user equipment in an initial registration, the network slice information including network slice types supported by the user equipment; and
group, based on the network slice information, distributed nodes in the area to be processed which support an identical network slice type into one service area, to obtain the multiple service areas after division.

In an embodiment, the service area division policy is pre-configured with the user equipment as the target division granularity, the service area division policy is pre-configured with the activity range of the user equipment as the target division granularity, and performing the area division on the area to be processed according to the service area division policy, to obtain the multiple service areas after division includes:
based on the activity range of the user equipment, classifying a distributed node within the activity range of the user equipment in the area to be processed as one type of service area, and classifying a distributed node outside the activity range of the user equipment as other service area, to obtain the multiple service areas after division.

In an embodiment, the apparatus 1400 further includes:
a transceiving module, which is configured to: in response to a mobility registration update request of the user equipment, acquire a service area list corresponding to an area where the user equipment is located, and send the acquired service area list to the user equipment.

In an embodiment, the transceiving module is configured to: in a case where the area where the user equipment is located takes each distributed node in the distributed network architecture as the division granularity or takes the activity range of the user equipment as the division granularity, in response to the mobility registration update request of the user equipment, receive area information of multiple service areas fed back by respective distributed nodes in the area where the user equipment is located, and construct the service area list corresponding to the area where the user equipment is located based on the area information of the multiple service areas; and
in a case where the area where the user equipment is located takes a single RAN as the division granularity or aggregates multiple RANs as the division granularity, in response to the mobility registration update request of the user equipment, receive area information of multiple service areas fed back by respective RANs in the area where the user equipment is located, and construct the service area list corresponding to the area where the user equipment is located based on the area information of the multiple service areas.

In an embodiment, as shown in FIG. 15, there is provided a service area division apparatus 1500, including:
a receiving module 1501, configured to send a mobility registration update request to a radio access network, RAN, and receive a service area list sent by the RAN, where the service area list includes area information of multiple service areas, the multiple service areas are obtained by performing area division on an area to be processed where a user equipment is located according to a service area division policy, and the service area division policy is pre-configured by a target division granularity, that matches area features of the area to be processed, in a distributed node in a distributed network architecture, the RAN, the user equipment, or an activity range of the user equipment; and
a sending module 1502, configured to send a configuration instruction to distributed nodes in the multiple service areas based on the area information of the multiple service areas when the user equipment moves among the multiple service areas, to complete mobile processing of the user equipment among the multiple service areas.

In an embodiment, the sending module 1502 is configured to: when the user equipment moves from a first service area to a second service area in the multiple service areas, send a deactivation instruction to a distributed node in the first service area, and send an activation instruction to a distributed node in the second service area; and
transfer a service of the user equipment from the distributed node in the first service area to the distributed node in the second service area.

The modules in the service area division apparatuses may be wholly or partially implemented by software, hardware and a combination thereof. The modules may be embedded in or independent of a processor in hardware, or may be stored in a memory in the processor in software, such that the processor can conveniently call the modules to execute the operations corresponding to the modules.

It should be noted herein that the apparatuses according to the embodiment of the present disclosure can implement all the method steps implemented in the embodiments directed to the methods, and can achieve the same technical effects, and the same parts and beneficial effects of these embodiments as those directed to the methods are not repeated herein.

It should be noted that the division of the modules in the embodiments of the present disclosure is schematic, and is only logical function division, and there may be another division manner in actual implementation. In addition, all functional modules in the embodiments of the present disclosure may be integrated into one processing module, or each of the modules may exist alone physically, or two or more modules are integrated into one module. The integrated module can be realized in the form of hardware or be embodied into a software functional module.

When implemented in the form of software functional modules and sold or used as independent products, the integrated modules can be stored in a processor readable storage medium. Based on such an understanding, the technical solutions of the present disclosure essentially, or the part contributing to the prior art, or all or a part of the technical solutions may be implemented in the form of a software product. The computer software product is stored on a storage medium and includes several instructions for instructing a computer device (which may be a personal computer, a server, or a network device) or a processor to perform all or a part of steps of any methods described in the embodiments of the present disclosure.

The processor readable storage medium may be any available medium or data storage device that can be accessed by a processor, including but not limited to a magnetic memory (e.g., a floppy disk, a hard disk, magnetic tape, a magneto-optical disk, MO, etc.), an optical memory (e.g., a CD, a DVD, a BD, an HVD, etc.), and a semiconductor memory (e.g., an ROM, an EPROM, an EEPROM, a non-transitory memory, NAND FLASH, and a solid state disk, SSD), etc.

It will be understood by those skilled in the art that all or part of the processes of the method according to the embodiments described above may be implemented by a computer program instructing related hardware, and the computer program may be stored in a non-transitory computer readable storage medium, and when executed, may include the processes of the embodiments of the method described above. Any reference to memories, databases or other media used in the embodiments of the present disclosure can include at least one of a non-transitory memory and a transitory memory. The non-transitory memory may include a read-only memory, ROM, a magnetic tape, a floppy disk, a flash memory, an optical memory, a high-density embedded non-transitory memory, a resistive random access memory, ReRAM, a magnetoresistive random access memory MRAM, a ferroelectric random access memory, FRAM, a phase change memory, PCM, a graphene memory, or the like. The transitory memory can include a random access memory, RAM, an external cache memory, or the like. By way of illustration and not limitation, the RAM can take many forms, such as a static random access memory, SRAM, a dynamic random access memory, DRAM, or the like. The databases involved in the embodiments of the present disclosure may include at least one of relational and non-relational databases. The non-relational database may include, but is not limited to, a block chain-based distributed database, or the like. The processors referred to in the embodiments of the present disclosure may include, but are not limited to, general processors, central processors, graphics processors, digital signal processors, programmable logic units, data processing logic units based on quantum calculations, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as falling within the scope of the specification.

The above-described embodiments are only several implementations of the present disclosure, and the descriptions are relatively detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the protection scope of the present disclosure should be subject to the appended claims.

## Claims

1. A service area division method, applied to a radio access network, RAN, **characterized by** comprising:
determining an area to be processed;
performing area division on the area to be processed according to a service area division policy, to obtain a plurality of service areas after division, wherein the service area division policy is pre-configured by a target division granularity, and the target division granularity matches with area features of the area to be processed and is selected from a group consisting of division granularities of a distributed node in a distributed network architecture, the RAN, a user equipment, and an activity range of the user equipment; and
constructing a service area list based on area information of the plurality of service areas, wherein the service area list is sent to the user equipment, and is configured to indicate that no mobility registration updates nor handovers occur when the user equipment moves in a plurality of service areas in the service area list.

2. The service area division method according to claim 1, wherein the service area division policy is pre-configured with a single RAN as the target division granularity, and performing the area division on the area to be processed according to the service area division policy, to obtain the plurality of service areas after division comprises:
in a case where a deployment of base stations in the area to be processed meets a first base station distribution condition, dividing the area to be processed into the plurality of service areas by taking the single RAN in the area to be processed as the division granularity, wherein each RAN connects to a plurality of distributed nodes.

3. The service area division method according to claim 1, wherein the service area division policy is pre-configured with a plurality of RANs as the target division granularity, and performing the area division on the area to be processed according to the service area division policy, to obtain the plurality of service areas after division comprises:
in a case where a deployment of base stations in the area to be processed meets a second base station distribution condition, aggregating the plurality of RANs meeting a preset physical distance condition into one division granularity; and
dividing the area to be processed into the plurality of service areas based on the division granularity after aggregation.

4. The service area division method according to claim 1, wherein the service area division policy is pre-configured with the user equipment as the target division granularity, and performing the area division on the area to be processed according to the service area division policy, to obtain the plurality of service areas after division comprises:
acquiring network slice information carried by the user equipment in an initial registration, the network slice information comprising network slice types supported by the user equipment; and
grouping, based on the network slice information, distributed nodes in the area to be processed which support an identical network slice type into one service area, to obtain the plurality of service areas after division.

5. The service area division method according to claim 1, wherein the service area division policy is pre-configured with the activity range of the user equipment as the target division granularity, and performing the area division on the area to be processed according to the service area division policy, to obtain the plurality of service areas after division comprises:
based on the activity range of the user equipment, classifying a distributed node within the activity range of the user equipment in the area to be processed as one type of service area, and classifying a distributed node outside the activity range of the user equipment as other service area, to obtain the plurality of service areas after division.

6. The service area division method according to claim 1, wherein after constructing the service area list based on the area information of the plurality of service areas, the service area division method further comprises:
in response to a mobility registration update request of the user equipment, acquiring a service area list corresponding to an area where the user equipment is located, and sending the acquired service area list to the user equipment.

7. The service area division method according to claim 6, wherein in response to the mobility registration update request of the user equipment, acquiring the service area list corresponding to the area where the user equipment is located comprises:
in a case where the area where the user equipment is located takes each distributed node in the distributed network architecture as the division granularity or takes the activity range of the user equipment as the division granularity, in response to the mobility registration update request of the user equipment, receiving area information of a plurality of service areas fed back by respective distributed nodes in the area where the user equipment is located, and constructing the service area list corresponding to the area where the user equipment is located based on the area information of the plurality of service areas; and
in a case where the area where the user equipment is located takes a single RAN as the division granularity or aggregates a plurality of RANs as the division granularity, in response to the mobility registration update request of the user equipment, receiving area information of a plurality of service areas in the area where the user equipment is located, the area information of the plurality of service areas being fed back by respective RANs, and constructing the service area list corresponding to the area where the user equipment is located based on the area information of the plurality of service areas.

8. A service area division method, applied to a user equipment, **characterized by** comprising:
sending a mobility registration update request to a radio access network,RAN, and receiving a service area list sent by the RAN, wherein the service area list comprises area information of a plurality of service areas, the plurality of service areas are obtained by performing area division on an area to be processed where the user equipment is located according to a service area division policy, the service area division policy is pre-configured by a target division granularity, and the target division granularity matches with area features of the area to be processed and is selected from a group consisting of division granularities of a distributed node in a distributed network architecture, the RAN, the user equipment, and an activity range of the user equipment; and
when the user equipment moves among the plurality of service areas, sending a configuration instruction to distributed nodes in the plurality of service areas based on the area information of the plurality of service areas, to complete mobile processing of the user equipment among the plurality of service areas.

9. The service area division method according to claim 8, wherein when the user equipment moves among the plurality of service areas, sending the configuration instruction to the distributed nodes in the plurality service areas based on the area information of the plurality of service areas comprises:
when the user equipment moves from a first service area to a second service area in the plurality of service areas, sending a deactivation instruction to a distributed node in the first service area, and sending an activation instruction to a distributed node in the second service area; and
transferring a service of the user equipment from the distributed node in the first service area to the distributed node in the second service area.

10. A service area division apparatus, **characterized by** comprising:
a determining module, configured to determine an area to be processed;
a dividing module, configured to perform area division on the area to be processed according to a service area division policy, to obtain a plurality of service areas after division, wherein the service area division policy is pre-configured by a target division granularity, and the target division granularity matches with area features of the area to be processed and is selected from a group consisting of division granularities of a distributed node in a distributed network architecture, a radio access network, RAN, a user equipment, and an activity range of the user equipment; and
a constructing module, configured to construct a service area list based on area information of the plurality of service areas, wherein the service area list is sent to the user equipment, and is configured to indicate that no mobility registration updates nor handovers occur when the user equipment moves in the plurality of service areas.

11. The service area division apparatus according to claim 10, wherein the service area division policy is pre-configured with a single RAN as the target division granularity, and the dividing module is configured to, in a case where a deployment of base stations in the area to be processed meets a first base station distribution condition, divide the area to be processed into the plurality of service areas by taking the single RAN in the area to be processed as the division granularity, wherein each RAN connects to a plurality of distributed nodes.

12. The service area division apparatus according to claim 10, wherein the service area division policy is pre-configured with a plurality of RANs as the target division granularity, and the dividing module is configured to:
in a case where a deployment of base stations in the area to be processed meets a second base station distribution condition, aggregate the plurality of RANs meeting a preset physical distance condition into one division granularity; and
divide the area to be processed into the plurality of service areas based on the division granularity after aggregation.

13. The service area division apparatus according to claim 10, wherein the service area division policy is pre-configured with the user equipment as the target division granularity, and the dividing module is configured to:
acquire network slice information carried by the user equipment in an initial registration, the network slice information comprising network slice types supported by the user equipment; and
group, based on the network slice information, distributed nodes in the area to be processed which support an identical network slice type into one service area, to obtain the plurality of service areas after division.

14. The service area division apparatus according to claim 10, wherein the service area division policy is pre-configured with the activity range of the user equipment as the target division granularity, and the dividing module is configured to, based on the activity range of the user equipment, classify a distributed node within the activity range of the user equipment in the area to be processed as one type of service area, and classify a distributed node outside the activity range of the user equipment as other service area, to obtain the plurality of service areas after division.

15. The service area division apparatus according to claim 10, further comprising:
a transceiving module, configured to: in response to a mobility registration update request of the user equipment, acquire a service area list corresponding to an area where the user equipment is located, and send the acquired service area list to the user equipment.

16. The service area division apparatus according to claim 15, wherein the transceiving module is configured to:
in a case where the area where the user equipment is located takes each distributed node in the distributed network architecture as the division granularity or takes the activity range of the user equipment as the division granularity, in response to the mobility registration update request of the user equipment, receive area information of a plurality of service areas fed back by respective distributed nodes in the area where the user equipment is located, and construct the service area list corresponding to the area where the user equipment is located based on the area information of the plurality of service areas; and
in a case where the area where the user equipment is located takes a single RAN as the division granularity or aggregates a plurality of RANs as the division granularity, in response to the mobility registration update request of the user equipment, receive area information of a plurality of service areas in the area where the user equipment is located, the area information of the plurality of service areas being fed back by respective RANs, and construct the service area list corresponding to the area where the user equipment is located based on the area information of the plurality of service areas.

17. A service area division apparatus, applied to a user equipment, **characterized by** comprising:
a receiving module, configured to send a mobility registration update request to a radio access network, RAN, and receive a service area list sent by the RAN, wherein the service area list comprises area information of a plurality of service areas, the plurality of service areas are obtained by performing area division on an area to be processed where the user equipment is located according to a service area division policy, the service area division policy is pre-configured by a target division granularity, and the target division granularity matches with area features of the area to be processed and is selected from a group consisting of division granularities of a distributed node in a distributed network architecture, the RAN, the user equipment, and an activity range of the user equipment; and
a sending module, configured to send a configuration instruction to distributed nodes in the plurality of service areas based on the area information of the plurality of service areas when the user equipment moves among the plurality of service areas, to complete mobile processing of the user equipment among the plurality of service areas.

18. The service area division apparatus according to claim 17, wherein the sending module is configured to:
when the user equipment moves from a first service area to a second service area in the plurality of service areas, send a deactivation instruction to a distributed node in the first service area, and send an activation instruction to a distributed node in the second service area; and
transfer a service of the user equipment from the distributed node in the first service area to the distributed node in the second service area.

19. A radio access network, RAN, **characterized by** comprising a memory, a transceiver and a processor;
wherein the memory is configured to store a computer program; the transceiver is configured to transceive data under control of the processor; and the processor is configured to read the computer program stored in the memory and perform:
determining an area to be processed;
performing area division on the area to be processed according to a service area division policy, to obtain a plurality of service areas after division, and constructing a service area list based on area information of the plurality of service areas, wherein the service area division policy is pre-configured by a target division granularity, and the target division granularity matches with area features of the area to be processed and is selected from a group consisting of division granularities of a distributed node in a distributed network architecture, the RAN, a user equipment, and an activity range of the user equipment; and
constructing a service area list based on area information of the plurality of service areas, wherein the service area list is sent to the user equipment, and is configured to indicate that no mobility registration updates nor handovers occur when the user equipment moves in a plurality of service areas in the service area list.

20. The RAN according to claim 19, wherein the service area division policy is pre-configured with a single RAN as the target division granularity, and performing the area division on the area to be processed according to the service area division policy, to obtain the plurality of service areas after division comprises:
in a case where a deployment of base stations in the area to be processed meets a first base station distribution condition, dividing the area to be processed into the plurality of service areas by taking the single RAN in the area to be processed as the division granularity, wherein each RAN connects to a plurality of distributed nodes.

21. The RAN according to claim 19, wherein the service area division policy is pre-configured with a plurality of RANs as the target division granularity, and performing the area division on the area to be processed according to the service area division policy, to obtain the plurality of service areas after division comprises:
in a case where a deployment of base stations in the area to be processed meets a second base station distribution condition, aggregating the plurality of RANs meeting a preset physical distance condition into one division granularity; and
dividing the area to be processed into the plurality of service areas based on the division granularity after aggregation.

22. The RAN according to claim 19, wherein the service area division policy is pre-configured with the user equipment as the target division granularity, and performing the area division on the area to be processed according to the service area division policy, to obtain the plurality of service areas after division comprises:
acquiring network slice information carried by the user equipment in an initial registration, the network slice information comprising network slice types supported by the user equipment; and
grouping, based on the network slice information, distributed nodes in the area to be processed which support an identical network slice type into one service area, to obtain the plurality of service areas after division.

23. The RAN according to claim 19, wherein the service area division policy is pre-configured with the activity range of the user equipment as the target division granularity, and performing the area division on the area to be processed according to the service area division policy, to obtain the plurality of service areas after division comprises:
based on the activity range of the user equipment, classifying a distributed node within the activity range of the user equipment in the area to be processed as one type of service area, and classifying a distributed node outside the activity range of the user equipment as other service area, to obtain the plurality of service areas after division.

24. The RAN according to claim 19, wherein the processor is further configured to read the computer program stored in the memory and perform:
in response to a mobility registration update request of the user equipment, acquiring a service area list corresponding to an area where the user equipment is located, and sending the acquired service area list to the user equipment.

25. The RAN according to claim 24, wherein in response to the mobility registration update request of the user equipment, acquiring the service area list corresponding to the area where the user equipment is located comprises:
in a case where the area where the user equipment is located takes each distributed node in the distributed network architecture as the division granularity or takes the activity range of the user equipment as the division granularity, in response to the mobility registration update request of the user equipment, receiving area information of a plurality of service areas fed back by respective distributed nodes in the area where the user equipment is located, and constructing the service area list corresponding to the area where the user equipment is located based on the area information of the plurality of service areas; and
in a case where the area where the user equipment is located takes a single RAN as the division granularity or aggregates a plurality of RANs as the division granularity, in response to the mobility registration update request of the user equipment, receiving area information of a plurality of service areas in the area where the user equipment is located, the area information of the plurality of service areas being fed back by respective RANs, and constructing the service area list corresponding to the area where the user equipment is located based on the area information of the plurality of service areas.

26. A user equipment, **characterized by** comprising a memory, a transceiver and a processor;
wherein the memory is configured to store a computer program; the transceiver is configured to transceive data under control of a processor; and the processor is configured to read the computer program stored in the memory and perform:
sending a mobility registration update request to a radio access network, RAN, and receiving a service area list sent by the RAN, wherein the service area list comprises area information of a plurality of service areas, the plurality of service areas are obtained by performing area division on an area to be processed where the user equipment is located according to a service area division policy, the service area division policy is pre-configured by a target division granularity, and the target division granularity matches with area features of the area to be processed and is selected from a group consisting of division granularities of a distributed node in a distributed network architecture, the RAN, the user equipment, and an activity range of the user equipment; and
when the user equipment moves among the plurality of service areas, sending a configuration instruction to distributed nodes in the plurality of service areas based on the area information of the plurality of service areas, to complete mobile processing of the user equipment among the plurality of service areas.

27. The user equipment according to claim 26, wherein when the user equipment moves among the plurality of service areas, sending the configuration instruction to the distributed nodes in the plurality of service areas based on the area information of the plurality of service areas comprises:
when the user equipment moves from a first service area to a second service area in the plurality of service areas, sending a deactivation instruction to a distributed node in the first service area, and sending an activation instruction to a distributed node in the second service area; and
transferring a service of the user equipment from the distributed node in the first service area to the distributed node in the second service area.

28. A service area division system, comprising:
a radio access network, RAN, configured to: determine an area to be processed, perform area division on the area to be processed according to a service area division policy, to obtain a plurality of service areas after division, and construct a service area list based on area information of the plurality of service areas; wherein the service area division policy is pre-configured by a target division granularity, and the target division granularity matches with area features of the area to be processed and is selected from a group consisting of division granularities of a distributed node in a distributed network architecture, the RAN, a user equipment, and an activity range of the user equipment; and
the user equipment, configured to send a mobility registration update request to the RAN and receive the service area list sent by the RAN.

29. The service area division system according to claim 28, further comprising the distributed node;
wherein in a case where the service area division policy takes the distributed node in the distributed network architecture as the target division granularity, the distributed node is configured to:
allocate service areas to the user equipment if the user equipment moves among a plurality of service areas; and
send area information of the allocated service areas to the RAN, to enable the RAN to issue a service area list comprising the area information of the allocated service areas to the user equipment.

30. A processor readable storage medium, which stories a program thereon, wherein the program is configured to cause a processor to perform the service area division method according to any one of claims 1 to 7 or the service area division method according to any one of claims 8 to 9.

31. A computer program product, comprising a computer program, wherein the computer program, when executed by a processor, performs the steps of the service area division method according to any one of claims 1 to 7 or the service area division method according to any one of claims 8 to 9.
